# EUROPÄISCHE PATENTANMELDUNG

(11) **EP 0 753 344 A2**
(43) Veröffentlichungstag der Anmeldung: **15.01.1997**
(21) Anmeldenummer: 96111112.7
(22) Anmeldetag: 10.07.1996
(51) Int. Cl.: B01J 3/04, B01J 3/02

(54) **Autoklav zur Herstellung von Kunststoffen**

(30) Priorität: 13.07.1995 DE 19525579
(71) Anmelder: RIETER AUTOMATIK GmbH, D-63762 Grossostheim (DE)
(72) Erfinder: Locker, Peter, 63762 Grossostheim (DE)
(74) Vertreter: Bardehle, Heinz, Dipl.-Ing.

(57) **Zusammenfassung**

Die Erfindung betrifft einen als im wesentlichen zylinderisches Druckgefäß ausgebildeten Autoklaven mit daran angeschlossenem Austragsorgan zur Herstellung von Kunststoffen. Der Autoklav ist stationär mit derartiger Schräglage angeordnet, daß die Oberfläche des im Autoklaven gebildeten Flüssigkeitsspiegels gegenüber demjenigen bei senkrechter Anordnung wesentlich, vorzugsweise um etwa das 1,5-fache, vergrößert ist und im Bereich des Übergangs seines Bodens in die zylindrische Wandung des Autoklaven das Austragsorgan angeordnet ist.

## Beschreibung

Die Erfindung bezieht sich auf einen als im wesentlichen zylinderisches Druckgefäß ausgebildeter Autoklav mit daran angeschlossenem Austragsorgan zur Herstellung von Kunststoffen.

Derartige im wesentlichen zylindrische Autoklaven sind in üblicher Weise mit vertikaler Achsrichtung angeordnet und bilden in der Regel an ihrem unteren Ende einen Trichter, um das Austragen des im Autoklav enthaltenen flüssigen Kunststoffs zu erleichtern. Einen derart aufgebauten Autoklaven zeigt die DE-PS 34 09 397. Der Trichter ist dabei Bestandteil der Wandung des Autoklaven. Um den Autoklav für die Durchführung der sich in seinem Inneren abspielenden chemischen Reaktion verschließen zu können, ist an den Trichter ein Austragorgan angeschlossen, das wahlweise geöffnet und geschlossen werden kann. Die Geschwindigkeit der chemischen Reaktion hängt auch davon ab, wie schnell eine Ableitung von flüchtigen Bestandteilen vor sich geht, die sich an der Oberfläche der im Autoklaven befindlichen Flüssigkeitsmenge abscheiden. Aus diesem Grunde strebt man beim Aufbau von Autoklaven einen größtmöglichen Durchmesser an, um eine große Oberfläche für die Abscheidung der flüchtigen Bestandteile zu erzielen. Je größer der Durchmesser ist, desto größer wird der Konuswinkel des Trichters, da aus baulichen Gründen meist eine größere Länge des Autoklaven unerwünscht ist. Mit der Vergrößerung des Konuswinkels wird jedoch das Auslaufverhalten des viskosen Kunststoffs ungünstig beeinflußt.

Der Erfindung liegt daher die Aufgabe zugrunde, mit dem Autoklaven eine hohe Reaktionsgeschwindigkeit zu erzielen und gleichzeitig für ein günstiges Auslaufwerhalten des Kunststoffs zu sorgen. Erfindungsgemäß geschieht dies dadurch, daß der Autoklav stationär mit derartiger Schräglage angeordnet ist, daß die Oberfläche des im Autoklaven gebildeten Flüssigkeitsspiegels gegenüber denjenigen bei senkrechter Anordnung wesentlich, vorzugsweise um etwa das 1,5-fache, vergrößert ist und im Bereich des Übergangs seines Bodens in die zylindrische Wandung des Autoklaven das Austragsorgan angeordnet ist.

Aufgrund der Schräglage des Autoklaven ergibt sich mit Rücksicht auf dessen im wesentlichen zylindrischen Wandung ein Flüssigkeitsspiegel mit ovaler Erstreckung, wobei die große Achse dieses Ovals um so größer ist, je größer die Schräglage des Autoklaven ist. Bei einer Schräglage von mindestens etwa 40° ergibt sich bereits eine Vergrößerung des Flüssigkeitsspiegels gegenüber der senkrechten Anordnung (kreisförmiger Rand des Flüssigkeitsspiegels) um etwa 30 %, was sich in einer entsprechenden Erhöhung der Reaktionsgeschwindigkeit äußert. Bei einer Schräglage von ca. 48° ergibt sich bereits eine Oberflächenvergrößerung um das 1,5-fache, womit sich also eine erhebliche Erhöhung der Reaktionsgeschwindigkeit erzielen läßt. Dabei wird der Bereich des Übergangs des Bodens des Autoklaven in seine zylindrische Wandung als eine Art Trichter ausgenutzt, der sich aufgrund der Schräglage der zylindrischen Wandung und des im wesentlichen radial verlaufenden Bodens automatisch ergibt. Durch die Anordnung des Austragsorgans im Bereich dieses Übergangs erzielt man ein günstiges Fließverhalten des Kunststoffs in Richtung zum Austragsorgan.

Zweckmäßig bezieht man das Austragsorgan mindestens teilweise in die Wandung des Autoklaven derart ein, daß der im Autoklav befindliche Kunststoff über dessen Wandung unmittelbar in das Austragsorgan und eine in diesem angeordnete Absperrvorrichtung fließt. Durch diese Einbeziehung des Austragsorgans in die Wandung ergibt sich für den in das Austragsorgan fließenden Kunststoff praktisch kein Bereich, in dem dieser nicht den im Autoklaven selbst herrschenden Verhältnissen ausgesetzt ist, z.B. dem Einfluß eines darin befindlichen Rührwerks. Außerdem wird durch die Einbeziehung des Austragsorgans in die Wandung des Autoklaven die Beheizung des Austragsorgans verbessert sowie ein sonst üblicher, zum Austragsorgan führender Austragskanal vermieden, der sich auf das Fließverhalten des Kunststoffs ungünstig auswirkt und im übrigen, wie gesagt, den dort befindlichen Kunststoff den im Autoklaven herrschenden Verhältnissen entzieht. Die Vermeidung eines Austragskanals führt außerdem dazu, daß für dessen Überwindung kein erhöhter Druck im Autoklaven für das Austragen des Kunststoffs erforderlich ist, was auf eine entsprechende Energieeinsparung hinausläuft.

In den Figuren ist, ausgehend von der Darstellung des Standes der Technik, ein Ausführungsbeispiel der Erfindung dargestellt. Es zeigen
- Fig. 1: die übliche Anordnung eines zylindrischen Autoklaven mit senkrechter Achse (Stand der Technik),
- Fig. 2: den erfindungsgemäß in Schräglage angeordneten Autoklaven mit in seine Wandung einbezogenen Austragsorgan,
- Fig. 3: eine graphische Gegenüberstellung des Flüssigkeitsspiegels im Falle senkrechter und schräger Anordnung des Autoklaven,
- Fig. 4: ein Diagramm mit Darstellung der Oberflächenvergrößerung in Abhängigkeit vom Neigungswinkel.

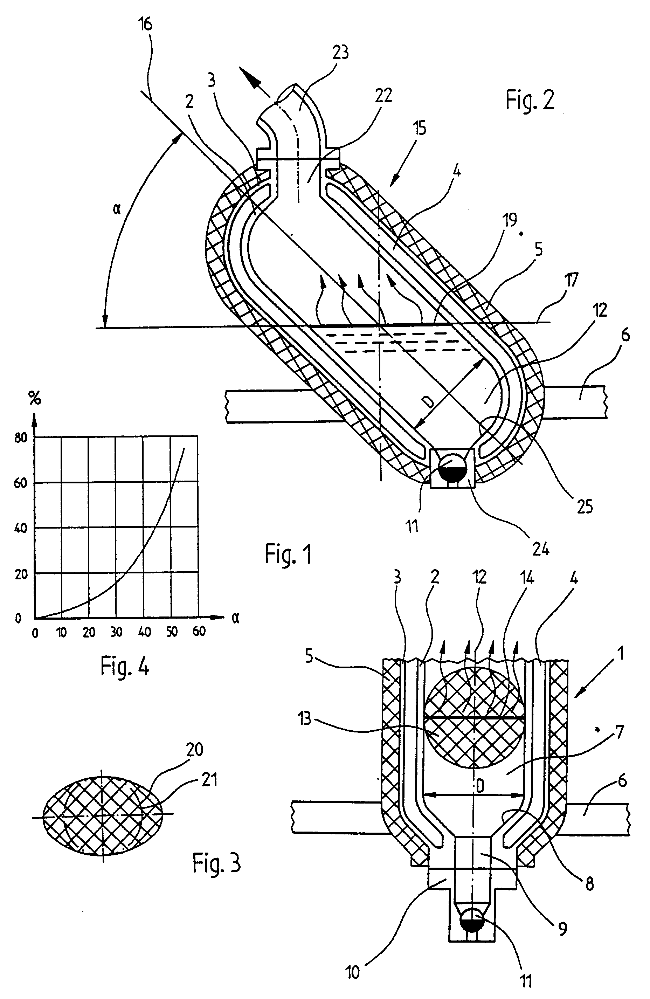

Figur 1 zeigt einen als zylindrisches Druckgefäß ausgebildeten Autoklaven 1, der durch die Innenwand 2 und die Außenwand 3 gestaltet ist. Zwischen der Innenwand 2 und der Außenwand 3 ist der Heizraum 4 angeordnet. Die Außenwand 3 wird von der Isolation 5 eingeschlossen. Der Innenraum 7 des Autoklaven 1 geht über den Ablauftrichter 8 in den Auslaßkanal 9 über, an den sich das Austragsorgan 10 anschließt. Das Austragsorgan 10 enthält die Absperrvorrichtung 11, die wahlweise geöffnet oder geschlossen werden kann. In dem dargestellten Austragsorgan 10 ist die Absperrvorrichtung als drehbarer Ventilkörper mit halbkreisförmigem Querschnitt ausgebildet. Der Autoklav 1 ist in eine horizontale Gebäudedecke 6 eingebaut.

Wie ersichtlich, verläuft die durch die strichpunktierte Linie 12 angedeutete Achse des Autoklaven 1 in vertikaler Richtung, so daß das im Autoklaven 1 enthaltene Kunststoffmaterial gleichmäßig durch den Ablauftrichter 8 in den Auslaßkanal 9 fließen kann. Eine im Innenraum 7 befindliche Kunststoffmenge weist dementsprechend eine kreisförmige Oberfläche auf, die durch die kreuzschraffierte Kreisfläche 13 dargestellt ist. Die Diametrale durch Kreisfläche 13 stellt dann den Flüssigkeitsspiegel 14 der Kunststoffmenge dar. Von diesem Flüssigkeitsspiegel 14 werden flüchtige Bestandteile, angedeutet durch die Pfeile, abgegeben und gelangen dann in einen in der Figur 1 nicht dargestellten Ableitkanal.

Figur 2 zeigt die erfindungsgemäße Anordnung eines Autoklaven 15, dessen durch die strichpunktierte Linie 16 dargestellte Achse gegenüber der Horizontalen 17 den Winkel α einschließt und somit eine entsprechende Schräglage einnimmt. Aufgrund dieser Schräglage bildet sich bei einer im Innenraum 18 befindlichen Kunststoffmenge ein Flüssigkeitsspiegel 19 aus, der dem in Figur 3 dargestellten Oval 20 entspricht. In das in der Figur 3 dargestellte Oval 20 ist strichpunktiert der Kreis 21 eingezeichnet, der der Kreisfläche 13 gemäß Figur 1 entspricht, da die in den Figuren 1 und 2 dargestellten Autoklaven 1 und 15 den gleichen Innendurchmesser D besitzen. Aus der Figur 3 geht deutlich die Vergrößerung der Fläche des Flüssigkeitsspiegels im Autoklaven 15 gegenüber derjenigen des Autoklaven 1 hervor. Aufgrund dieser Oberflächenvergrößerung wird es den flüchtigen Bestandteilen der im Autoklaven 15 enthaltenen Kunststoffflüssigkeit erleichtert, über den Flüssigkeitsspiegel 19 zu entweichen (siehe die eingezeichneten Pfeile). Diese flüchtigen Bestandteile werden am oberen Ende des Autoklaven 15 in dem Auslaß 22 gesammelt und über das Auslaßrohr 23 in üblicher Weise abgeleitet. Dabei kann es sich um eine drucklose Ableitung oder auch um ein Absaugen durch Vakuum handeln.

Der Autoklav 15 ist wie der in der Figur 1 dargestellte Autoklav 1 in eine Decke 6 eines Gebäudes eingebaut. Er weist außerdem in bekannter Weise die Innenwand 2 und die Außenwand 3 auf, zwischen denen sich der Heizraum 4 befindet. Außerdem ist die Isolierung 5 vorgesehen. Es sei noch darauf hingewiesen, daß der Autoklav 15 in bekannter Weise ein hier nicht dargestelltes Rührwerk enthalten kann. Ein solches Rührwerk sorgt für eine ständige Durchmischung des Kunststoffmaterials und damit verbunden eine verbesserte Abscheidung der flüchtigen Bestandteile.

Aufgrund der Schräglage des Autoklaven 15 ergibt sich an dessen unterem Ende aufgrund der zylindrischen Innenwandung 2 und dem im wesentlichen radialsymmetrischen, abgerundeten Boden 25 eine Art Trichter, so daß das im Innenraum 18 befindliche Kunststoffmaterial automatisch die Tendenz erhält, der untersten Stelle im Autoklaven 15 zugeführt zu werden. An dieser untersten Stelle ist in die Wandung des Autoklaven 15, bestehend aus Innenwand 2, Außenwand 3 und Isolierung 5 das Austragsorgan 24 eingesetzt, das somit in diese Wandung einbezogen ist. Damit ergibt sich für das Austragen des Kunststoffs aus dem Autoklaven 15 ein besonders kurzer Weg. Es ist aber natürlich auch möglich, im Bedarfsfall an den Autoklaven 15 ein Austragsorgan so anzuschließen, wie dies in der Figur 1 dargestellt ist. Das Austragsorgan enthält wie bei der Gestaltung gemäß Figur 1 eine Absperrvorrichtung 11, die aus einem drehbaren Ventilkörper mit halbkreisförmigen Querschnitt besteht.

In der Figur 4 ist dargestellt, wie sich in Abhängigkeit vom Winkel α (siehe Figur 2) die Zunahme der Fläche des Flüssigkeitsspiegels in % verhält. Danach ergibt sich bei einem Winkel α von nur 20° eine Zunahme von ca. 8 %, wogegen bei einem Winkel von 50° die Zunahme ca. 55 % beträgt. Bei dem Ausführungsbeispiel gemäß Figur 2 ist der Winkel α gleich 45°, womit sich eine Zunahme der Oberfläche von ca. 40 % ergibt.

## Patentansprüche

1. Als im wesentlichen zylinderisches Druckgefäß ausgebildeter Autoklav (15) mit daran angeschlossenem Austragsorgan (20) zur Herstellung von Kunststoffen, **dadurch gekennzeichnet,** daß der Autoklav (15) stationär mit derartiger Schräglage angeordnet ist, daß die Oberfläche (19) des im Autoklaven (15) gebildeten Flüssigkeitsspiegels gegenüber demjenigen bei senkrechter Anordnung wesentlich, vorzugsweise um etwa das 1,5-fache, vergrößert ist und im Bereich des Übergangs seines Bodens (25) in die zylindrische Wandung (2) des Autoklaven das Austragsorgan (24) angeordnet ist.

2. Autoklav nach Anspruch 1, **dadurch gekennzeichnet,** daß die Längsachse (16) des Autoklaven (15) gegenüber der Senkrechten um mindestens etwa 40° geneigt ist.

3. Autoklav nach einem der Ansprüche 1 oder 2, **dadurch gekennzeichnet,** daß das Austragsorgan (24) mindestens teilweise in die Wandung (2,3,5) des Autoklaven (15) derart einbezogen ist, daß der im Autoklav (15) befindliche Kunststoff über dessen innere Wandung (2) unmittelbar in das Austragsorgan (24) und eine in diesem angeordnete Absperrvorrichtung (11) fließt.
